# EUROPEAN PATENT APPLICATION

(11) **EP 4 390 322 A1**
(43) Date of publication of application: **26.06.2024**
(21) Application number: 22215630.9
(22) Date of filing: 21.12.2022
(51) Int. Cl.: G01C 21/34, G01C 21/36, B60W 40/02

(54) **METHOD AND SYSTEM FOR HANDLING PATH SELECTION FOR A VEHICLE**

(71) Applicant: VOLVO TRUCK CORPORATION, 405 08 Göteborg (SE)
(72) Inventor: NORDHOLM, Linus, 436 40 Göteborg (SE); WILHELMSSON, Martin, 416 73 Göteborg (SE); SMIDEBRANT, Tobias, 415 16 Göteborg (SE); TRÖNNBERG, Gabriel, 461 57 Trollhättan (SE); BJERNETUN, Johan, 435 38 Mölnlycke (SE); BLOMQVIST, Jenny, 422 49 Hisings Backa (SE); LINDBERG, Johan, 415 24 Göteborg (SE); AXELSSON, Johan, 438 34 Landvetter (SE)
(74) Representative: Valea AB

(57) **Abstract**

The disclosure relates to a computer system (700) for determining a selected path to be taken by a vehicle (100), the computer system (700) comprising a processor device (702) configured to:
- monitor alternative paths for the vehicle (100);
- based on the monitoring, determine that the vehicle (100) approaches at least two alternative paths having different properties;
- determine a probability of the vehicle (100) taking each of the at least two alternative paths having different properties;
- compare the probabilities of the at least two alternative paths to each other; and to
- based on a result of the comparison of the probabilities, select a selected path amongst the at least two alternative paths.

## Description

### TECHNICAL FIELD

The disclosure relates generally to a computer system, a computer-implemented method, a vehicle, a computer program product, a control system and a non-transitory computer-readable storage medium. In particular aspects, the disclosure relates to handling path selection for the vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A vehicle may or may not have a predetermined destination. With a predetermined destination, the vehicle's navigation system may guide the user of the vehicle in how to reach the destination by displaying the route to the destination. Without a predetermined destination, it is up to the user to decide where the vehicle should travel, for example which road to select at an intersection. Even without a predetermined destination, the navigation system may guide the user in where to travel. In such scenario, the navigation system may predict or guess where the vehicle wants to travel and provides navigation information even without a predetermined destination. For example, the navigation system may use information about the traffic situation and recommend a path based with no or low risk for traffic congestion, without any accidents. The navigation system may use information about the driving history of the vehicle and, together with information about the current location of the vehicle, predict where the vehicle wants to travel.

Energy optimization is important for vehicles. There are several factors influencing the energy consumption such as outside temperature, friction towards the road surface, topography of the road etc. Navigation systems may take optimized energy consumption into account when selecting a route to the predetermined destination. Energy optimization is important even when the vehicle does not have a predetermined destination, but then it may be up to the user to make the necessary selections to achieve energy optimization.

Based on the above, it is a strive to develop further improved technology relating to improved selection of paths for a vehicle.

### SUMMARY

According to a first aspect of the disclosure, there is provided a computer system for determining a selected path to be taken by a vehicle, the computer system comprising a processor device configured to:
- monitor alternative paths for the vehicle;
- based on the monitoring, determine that the vehicle approaches at least two alternative paths having different properties;
- determine a probability of the vehicle taking each of the at least two alternative paths having different properties;
- compare the probabilities of the at least two alternative paths to each other; and to
- based on a result of the comparison of the probabilities, select a selected path amongst the at least two alternative paths.

The first aspect of the disclosure may seek to improve selection of a path. A technical benefit may include that improved path selection is provided. A technical benefit may include to reduce the insecurity of which will be the selected path when approaching alternative paths, where no destination or route has been predetermined and only a prediction of the path may be made. The reduced insecurity may then be used to optimize according to an improved weighting of the alternative paths.

According to a second aspect of the disclosure, there is provided a computer-implemented method for determining a selected path to be taken by a vehicle. The method comprising:
- monitoring, by a processor device of a computer system, alternative paths for the vehicle;
- based on the monitoring, determining, by the processor device, that the vehicle approaches at least two alternative paths having different properties;
- determining, by the processor device, a probability of the vehicle taking each of the at least two alternative paths having different properties;
- comparing, by the processor device, the probabilities of the at least two alternative paths to each other; and
- based on a result of the comparison of the probabilities, selecting, by the processor device, a selected path amongst the at least two alternative paths.

Technical benefits of the second aspect of the disclosure are largely analogous to the technical benefits of the first aspect of the disclosure. It shall also be noted that all examples of the second aspect of the disclosure are combinable with all examples of the first aspect of the disclosure, and vice versa.

In some examples, the method may comprise:
- initiating, by the processor device, preparation of the vehicle according to the selected path.

A technical benefit may include that energy consumption is optimized when the vehicle may be prepared according to the selected path. This may be done by for example lowering the state of the energy in batteries of the vehicle if the selected path is a downhill path in order to be able to benefit from regeneration of energy when travelling downhill.

In some examples, the result of the comparison of probabilities may indicate that a difference between the probability of one of the at least two alternative paths compared to the probabilities of the other alternative paths is at or above a probability threshold. The selected path may be selected to be the path with the difference at or above the probability threshold.

The path with the difference at or above the probability threshold may be the path with significant higher probability than the other paths. A technical benefit may include that there is no need for user input in order to select the path. The path selection may be performed automatically and using statistical methods. The path selection may be performed fast when it is performed automatically and based on the probability, i.e., when it is performed without the need for user input.

In some examples, the result of the comparison of probabilities may indicate that a difference between the probability of each of the at least two alternative paths compared to each other is below a probability threshold. The method may comprise:
- when the difference is below the probability threshold, determining, by the processor device, if the difference in properties of the at least two alternative paths are of a first category or second category.

When the difference between the probability of each of the at least two alternative paths compared to each other is below a probability threshold, then none of the paths may have a significant higher probability than others. The first category may indicate that the difference is important, and the second category may indicate that the difference is not important or less important. An example of the first category of difference may be that the paths are different in that one of them is a downhill path and the other path is an uphill path. An example of the second category of difference may be that the paths are different in that one of them is a gravel path and the other is an asphalt path. A technical benefit may include that, if the importance of the paths is not taken into account, it will not be acted upon. An insufficient magnitude of the difference in properties may lead to inaccuracy.

In some examples, the difference in properties may be of the first category, and the selected path may be selected to be the path with a highest probability compared to the other paths. The first category may indicate that the difference is important.

A technical benefit may include that there is no need for user input in order to select the path since the path selection is performed using statistical methods. The path selection is performed automatically. The path selection may be performed fast when it is performed automatically and based on the probability, i.e., when it is performed without the need for user input. If the difference in probabilities is large, i.e. above a threshold, a selection may be made based on performing a correct selection as often as possible. If the difference in probabilities is "small", then it may not be necessary to disturb the user by sending a request for input because there will be no specific action related to his/her input.

In some examples, the method may comprise:
- when the difference in properties is of a second category, providing, by the processor device, a request for path selection; and
- determining, by the processor device, if a response comprising path selection has been obtained;
- when the response has been obtained, then the selected path is selected to be the path indicated in the obtained response; and
- when the response has not been obtained, then the selected path is selected based on a weighted state associated with each of the at least two alternative paths.

The request may be sent to a user or operator of the vehicle. A technical benefit may include to increase the accuracy of the path selection since the user may have previous experience about path selection that he/she may utilize.

In some examples, the method may comprise:
- determining, by the processor device, a vehicle performance associated with the selected path compared to a non-selected path.

A technical benefit may include that information about the vehicle performance of selected and non-selected paths may be used as basis for future and upcoming path selection in order to increase their accuracy, speed and reliability.

In some examples, the preparation of the vehicle may be associated with one or more of: braking performance, driving performance, vehicle temperature, and/or energy consumption.

A technical benefit may include that the vehicle may be prepared in an optimal way considering the selected path. This may increase the lifetime of the vehicle, it may reduce the need for maintenance and risk of failure etc.

In some examples, the different properties of the at least two alternative paths may be associated with at least one of: topography, traffic congestion, not validated path selection, thermal conditions, Point of Interest (POI), possibilities and/or charging possibilities of the at least two alternative paths.

A technical benefit may include that multiple properties may be taken into account which increases the flexibility of the path selection.

According to a third aspect of the disclosure, there is provided a vehicle comprising a processor device configured to perform the method of the second aspect.

Technical benefits of the third aspect of the disclosure are largely analogous to the technical benefits of the first and second aspects of the disclosure. It shall also be noted that all examples of the third aspect of the disclosure are combinable with all examples of the first and second aspects of the disclosure, and vice versa.

According to a fourth aspect of the disclosure, there is provided a computer program product comprising program code for performing, when executed by a processor device, the method of the second aspect.

Technical benefits of the fourth aspect of the disclosure are largely analogous to the technical benefits of the first, second and third aspects of the disclosure. It shall also be noted that all examples of the fourth aspect of the disclosure are combinable with all examples of the first, second and third aspects of the disclosure, and vice versa.

According to a fifth aspect of the disclosure, there is provided a control system comprising one or more control units configured to perform the method of the second aspect.

Technical benefits of the fifth aspect of the disclosure are largely analogous to the technical benefits of the first, second, third and fourth aspects of the disclosure. It shall also be noted that all examples of the fifth aspect of the disclosure are combinable with all examples of the first, second, third and fourth aspects of the disclosure, and vice versa.

According to a sixth aspect of the disclosure, there is provided a non-transitory computer-readable storage medium comprising instructions, which when executed by a processor device, cause the processor device to perform the method of the second aspect.

Technical benefits of the sixth aspect of the disclosure are largely analogous to the technical benefits of the first, second, third, fourth and fifth aspects of the disclosure. It shall also be noted that all examples of the sixth aspect of the disclosure are combinable with all examples of the first, second, third, fourth and fifth aspects of the disclosure, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG.** 1 is an exemplary illustration of a vehicle, according to one example.
**FIG.** 2 is an exemplary illustration of a path selection, according to one example.
**FIG.** 3 is an exemplary illustration of a path selection, according to one example.
**FIG.** 4 is an exemplary illustration of a path selection, according to one example.
**FIG.** 5 is an exemplary flow chart illustrating a method, according to one example.
**FIG. 6** is an exemplary flow chart illustrating a method, according to one example.
**FIG. 7** is a schematic diagram of an exemplary computer system for implementing examples disclosed herein, according to one example.

### DETAILED DESCRIPTION

Aspects set forth below represent the necessary information to enable those skilled in the art to practice the disclosure.

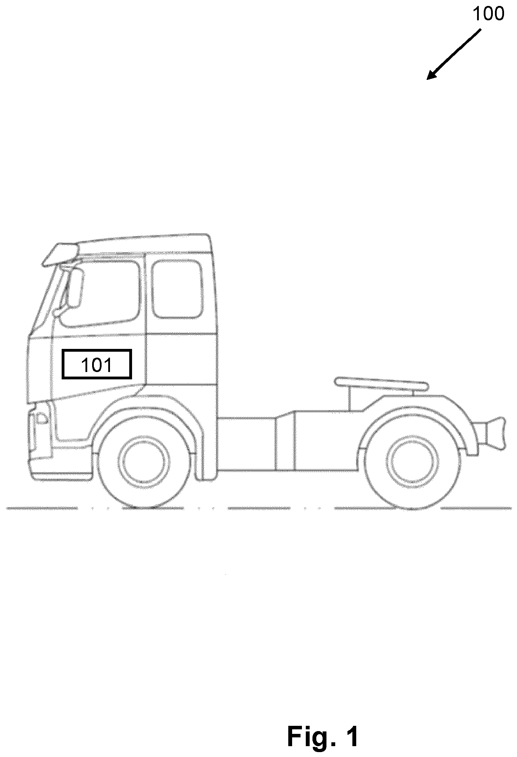

**FIG. 1** is an exemplary illustration of a vehicle **100,** according to one example. The vehicle **100** may be a heavy-duty vehicle, such as truck, bus, and construction equipment. Although the disclosure may be described with respect to a particular vehicle, the disclosure is not restricted to any particular vehicle.

The vehicle **100** may be an at least partly electrically driven vehicle **100,** i.e., it may be completely electrically driven, it may be partly electrically driven and partly driven by another drive technology such as a combustion engine, or it may be completely driven by a combustion engine. The vehicle **100** may be referred to as a hybrid vehicle when it is partly electrically driven and partly driven by e.g., a combustion engine.

The vehicle **100** may comprise a control unit **101.** The control unit **101** may be completely comprised in the vehicle **100,** it may be partly comprised in the vehicle **100** or it may be completely located offboard the vehicle. When the control unit **101** is partly comprised in the vehicle **100,** then a first part of the control unit **101** may be comprised in the vehicle **100** and at least a second part of the control unit **101** is comprised in an offboard location, e.g., a central server, a cloud computer etc.

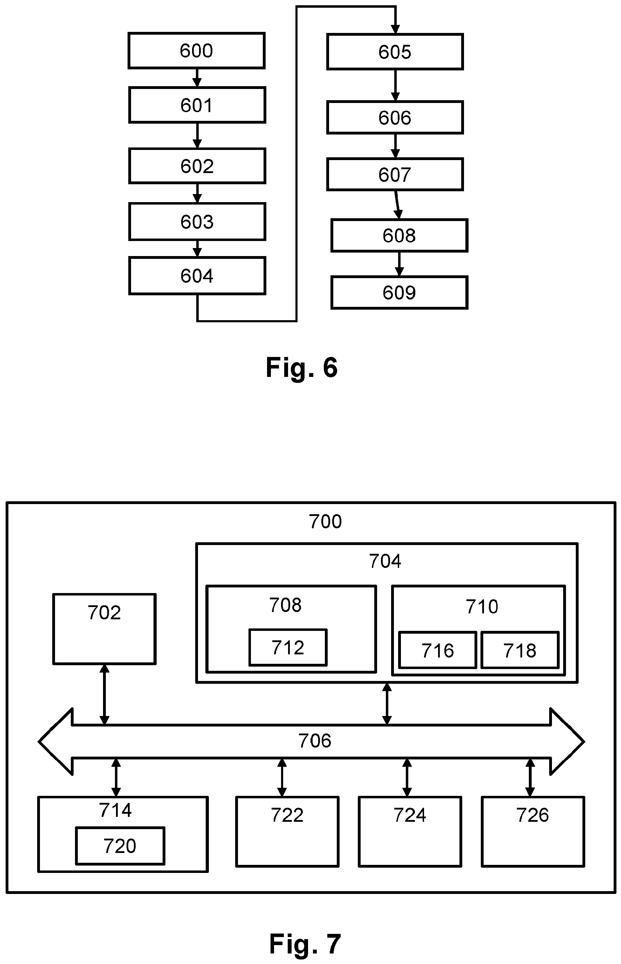

The control unit **101** may be comprised in a control system. The control system may comprise one or more control units **101.** The control unit **101** may be a processor device **702** (reference number **702** is illustrated in **FIG. 7** which will be described later), or the control unit **101** may be comprised in the processor device **702.** The control system may be a computer system **700** (reference number **700** is illustrated in **FIG. 7****)** or the control system may be comprised in the computer system **700.**

The control unit **101** may be at least partly comprised in a navigation system of the vehicle **100,** or it may be arranged to communicate with the navigation system of the vehicle **100.** The control unit **101** may be comprised in a user equipment (UE) such as a mobile phone, a tablet computer, an onboard system, or in any other suitable unit.

When a vehicle **100** travels without a predetermined given route it may utilize statistical methods to determine which is the most likely path to be taken and act upon this information. In some situations, the statistics does not give a confident path, or the selection is critical, and then the user may manually select the path. Hence, having the knowledge of which path that will be taken may influence the preparation of the vehicle 100 for the upcoming situation. Note that the difference between a route and a path may be that a route has a start and a predetermined destination, while a path does not have a predetermined destination.

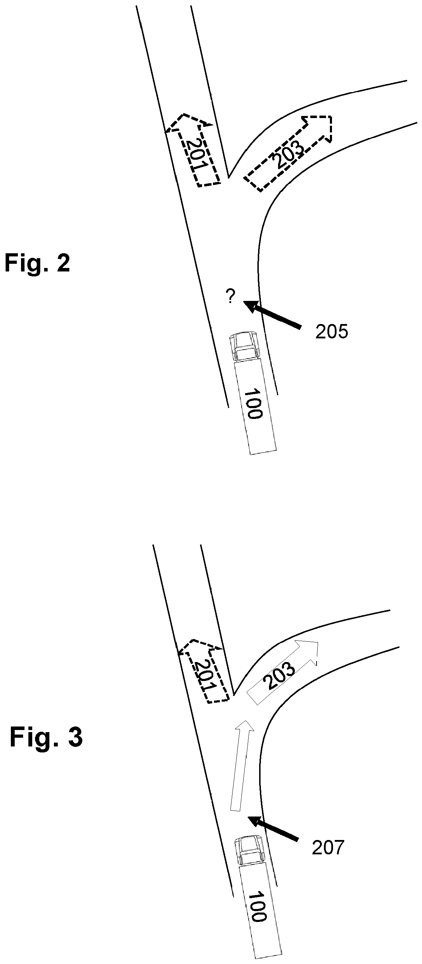

**FIG. 2** is an exemplary illustration of a path selection, according to one example. The example in **FIG. 2** illustrates a path selection made by a user of the vehicle **100.** The vehicle **100** is approaching an intersection and there are two alternative paths **201, 203** starting from the intersection. The alternative paths **201, 203** are illustrated with dotted lines in **FIGS. 2-4****.** Note that two alternative paths are shown as an example in **FIG. 2** and that any number of alternative paths may be applicable. The first path **201** exemplified in **FIG. 2** is to the left and the second path **203** is to the right. The left path **201** is a downhill path or comprises a downhill, and the right path **203** is an uphill path or comprises an uphill. When the vehicle **100** approaches the two alternative paths, a query **205** may be sent to the user, e.g., the driver, of the vehicle **100.** The query **205** may be for examples "Will you select the right (uphill) path? Yes/Now?" The query may be sent as a textual information on a display, e.g., in a mobile phone, a table computer, it may be audio information or in any other suitable form.

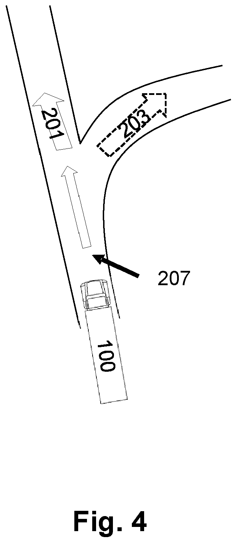

**FIG.** 3 is an exemplary illustration of a path selection, according to one example. **FIG. 3** is a continuation of **FIG. 2. FIG. 3** is an alternative to **FIG. 4****,** which will be described below. In response to the query **205,** the user may provide a response **207** which may be "Yes, I will take the uphill path". Thus, the user has selected which path the vehicle **100** should travel. The response may be textual information, it may be audio information or in any other suitable form. The right path **203** which now has been selected by the user is illustrated with solid lines in **FIG. 3****,** which is different from the left path **201,** i.e., the non-selected path, which is illustrated with dotted lines. Triggered by the path selection, the vehicle **100** optimizes its driving performance and energy consumption, for example the energy state in the batteries may be maximized before driving the uphill right path **203.**

**FIG. 4** is an exemplary illustration of a path selection, according to one example. **FIG. 4** is a continuation of **FIG. 2** and is an alternative to **FIG. 3****.**

In response to the query **205,** the user may provide a response **207** which may be "No, I will take the downhill path". Thus, the user has selected which path the vehicle **100** should travel. The user selects the downhill path **201** in **FIG. 4****,** instead of the uphill path **203** as in **FIG. 3****.** As in the example of **FIG. 3****,** the response may be textual information, it may be audio information or in any other suitable form. The left path **201** which now has been selected by the user is illustrated with solid lines in **FIG. 4****,** which is different from the right path **203,** i.e., the non-selected path, which is illustrated with dotted lines. Triggered by the path selection, the vehicle **100** optimizes its braking performance, for example the energy state in the batteries may be lowered before driving the downhill right path **201.**

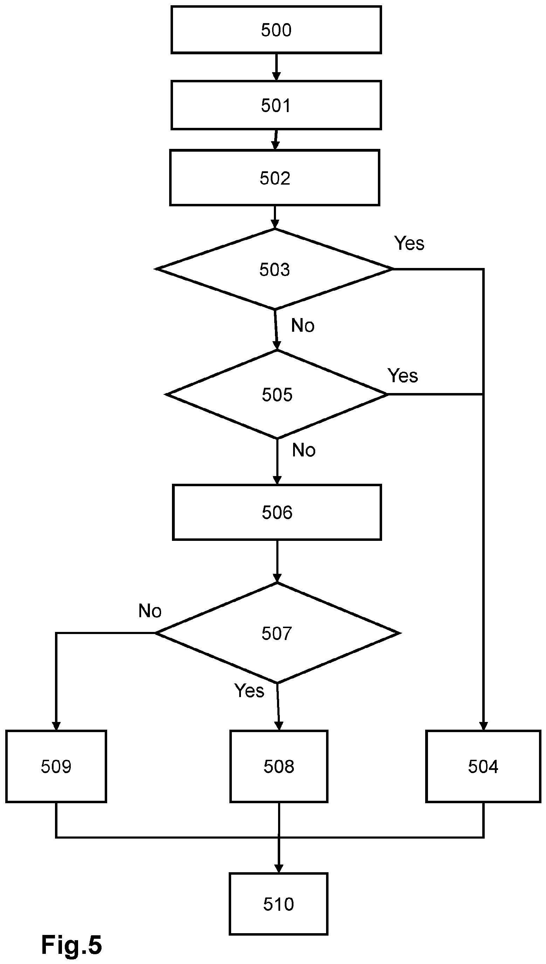

**FIG. 5** is an exemplary flow chart illustrating a method, according to one example. The method may be performed by the control unit **101,** the control system, the processor device **702,** or the computer system **700.** In the following, the steps are described as being performed by the processor device **702,** but they may equally be performed by control unit **101,** the control system or the computer system **700** instead of the processor device **702** or in cooperation with the processor device **702.** The method in **FIG. 5** comprises at least one of the following steps, which steps may be performed in any suitable order than described below:
Step **500:** The processor device **702** monitors alternative paths. The monitoring may be performed continuously when the vehicle **100** travels, it may be performed at predetermined time intervals, upon request or in any other suitable time schedule.
Step **501:** The processor device **702** determines that the vehicle **100** approaches at least two alternative paths, e.g., at an intersection. The at least two alternative paths have different properties. The difference in properties may be based on topography where one path is an uphill and the other path is a downhill, or it may be based on charging possibilities where one path does not have any charging station and the other path has at least one charging station etc. The difference in properties may be associated with information about frequent queues, or driving time along the paths, e.g., one path with lower speed signs or road work.
Step **502:** The processor device **702** determines a probability of all alternative paths being traveled by the vehicle **100.** In step **502,** processor device **702** may also determine a weighted state for each alternative paths. The weighted state may be a prioritization associated with the best possible path to travel, the safest path to travel etc. The weighted state may be based on a learning and/or statistical measure and a set of factors may be used to determine the best path. Some examples of factors may be average power usage, max power usage etc.
Step **503:** The processor device **702** checks if one path has significant higher probability than the other alternative paths or not. If one path has significant higher probability, as indicated with "yes" in **FIG. 5****,** then the processor device **702** proceeds to performing step **504.** If none of the paths have significant higher probability than the others, as indicated with "no" in **FIG. 5****,** then the processor device **702** proceeds to performing step **505.**
Step **504:** The processor device **702** selects the path amongst the alternative paths that has highest probability.
Step **505:** This step is performed if none of the paths have significant higher probability of being taken than the other paths. The processor device **702** may check if the property difference between the paths is of importance or not, i.e., if the difference is above a difference threshold. If the difference is of importance, as indicated with "yes" in **FIG. 5****,** then the processor device **702** proceeds to performing step **504.** If the difference is not of importance or less important, as indicated with "no" in **FIG. 5****,** then the processor device **702** proceeds to performing step **506.** For example, an uphill in one path may require high powerability and energy to perform the climb. A substantially flat path may require nominal powerability to drive. A downhill may require powerability in the charging direction and sufficient energy storage capacity to absorb the energy in combination with additional retardation measures such as service brakes, retarders etc,
Step **506:** This step corresponds to step **205** in **FIG. 2****.** The processor device **702** may send a request for path selection to a user. This step may be performed if the probability for a selection made by the processor device **702** is too low.
Step **507:** This step corresponds to step **207** in **FIG. 2****.** The processor device **702** may check if the user has selected a path, i.e., it checks if it has received a response from the user. When a user selected path has been received, indicated with "yes" in **FIG. 5****,** then the processor device **702** proceeds to performing step **508.** When a user selected path has not been received, indicated with "no" in **FIG. 5****,** then the processor device **702** proceeds to performing step **509.**
Step **508:** This step may be performed if a response with a selected path has been received from the user. The processor device **702** may select the path which has been selected by the user.
Step **509:** This step may be performed if no response with a user selected path has been received. The processor device **702** may select a path based on the weighted state which was determined in step **502.** When the path is selected based on a weighted state, none of the alternative paths may be optimal, but the most optimal one may still be selected based on the weighted state. As mentioned earlier, the weighted state may be a prioritization associated with the best possible path to travel, the safest path to travel etc. For example, the safest path may be selected. Safety may be prioritized over energy efficiency, for example so that the vehicle **100** should be able to brake sufficiently in a downhill, meaning that the processor device **702** safeguards that the vehicle **100** has enough available charging capacity in the batteries so that it can brake regeneratively. If the processor device **702** does not have exact knowledge of the path, then it may prioritize safety for the vehicle **100** and the user. This is a robust way of selecting the path.

There may be different causes for the lack of response from the user, for example the user may be occupied with driving the vehicle **100** and is not able to respond to the request, the user may not have detected the request for example because he/she has turned off the speaker in the vehicle **100,** or for any other reason.

Step **510:** The processor device initiates preparation of the vehicle **100** according to the selected path. Initiating of the preparation may comprise to send information indicating the selected path, the preparations to be performed etc. The preparation may comprise to maximize the state of energy in the batteries when the selected path is an uphill path, it may comprise to lower the state of energy in the batteries when the selected path is a downhill path etc. The preparation may comprise to improve the vehicle abilities in accordance with the selected path. The preparation may comprise to prepare the fuel cell for a specific power usage and adopt the State of Energy (SOE) plan of the rechargeable Energy Storage System (ESS), it may comprise to prepare the rechargeable ESS if the user indicated that the vehicle **100** should stop at a certain external energy transferring station etc. Consequently, the vehicle **100** prepares for the selected path.

**FIG. 6** is an exemplary flow chart illustrating a method, according to one example. The method may be performed by the control unit **101,** the control system, the processor device **702,** or the computer system **700.** In the following, the steps are described as being performed by the processor device **702,** but they may equally be performed by the control unit **101,** the control system or the computer system **700** instead of the processor device **702** or in cooperation with the processor device **702.** The method in **FIG. 6** comprises at least one of the following steps, which steps may be performed in any suitable order than described below:
Step **600:** This step corresponds to step **500** in **FIG.** 5. The processor device **702** monitors alternative paths for the vehicle **100.** The vehicle **100** has no predetermined planned path to travel and/or no virtual path to travel.
Step **601:** This step corresponds to step **501** in **FIG. 5****.** Based on the monitoring, the processor device **702** determines or detects that the vehicle **100** approaches at least two alternative paths having different properties. The at least two alternative paths may be at an intersection. The different properties may be above a property difference threshold, i.e., there may be a significant difference between the properties of the paths.

The different properties of the at least two alternative paths may be associated with at least one of: topography, traffic congestion, not validated path selection, thermal conditions, POI possibilities and/or charging possibilities of the at least two alternative paths. The topography may be uphill or downhill.

The different properties may be associated with thermal conditions, for example one path is 10 degrees colder than the other path.

The different properties may be associated with a risk for time delay in each path, e.g., due to road work, a risk for lack of charging stations, restaurants or other Points of Interest (POI).

When the vehicle **100** approaches alternative paths without or with negligible different properties, then these may not necessarily be of further interest, the processor device 702 may then go back to monitoring of the alternative paths in step **600.**

Step **602:** This step corresponds to step **502** in **FIG. 5****.** The processor device **702** determines a probability of the vehicle **100** taking each of the at least two alternative paths having different properties.

Step **603:** This step corresponds to step **503** in **FIG. 5****.** The processor device **702** compares the probabilities of the at least two alternative paths to each other. The probabilities may be below, at or above a probability threshold.

Step **604:** This step corresponds to step **505** in **FIG. 5****.** When the result of the comparison of probabilities made in step **603** indicates that a difference between the probability of each of the at least two alternative paths compared to each other is below the probability threshold, then the processor device **702** may determine if the difference in properties of the at least two alternative paths are of a first category or second category. In other words, none of the paths has significant higher probability than the others. The first category indicates that the difference in properties is important, and the second category indicates that the difference in properties is not important or less important.

The importance may be associated with for example that it is important to prepare the vehicle **100** for a long downhill braking event, where it will be important to have sufficient energy storage room in the batteries prior to entering the downhill slope. Another example may be that it may be important to prepare the vehicle **100** for a long uphill climb, for example by filling up the batteries and ramping up the fuel cell power level.

Step **605:** This step corresponds to step **205** in **FIG. 2** and step **506** in **FIG. 5****.** When the difference in properties from step **604** is of the second category, then the processor device **702** may provide a request for path selection. The request may be provided to a user of the vehicle **100,** e.g., via a mobile phone, a display inside vehicle, as audio information via a speaker etc. Step **506** may not necessarily be performed when the vehicle **100** is an autonomous vehicle **100.**

Step **605:** This step corresponds to step **207** in **FIG. 2** and step **507** in **FIG. 5****.** This step may be performed after step **605.** The processor device **702** may determine if a response comprising path selection has been obtained. The response may be obtained from the user.

Step **607:** This step corresponds to steps **504, 508, 509** in **FIG. 5****.** Based on a result of the comparison of the probabilities, the processor device **702** selects a selected path amongst the at least two alternative paths.

When the result of the comparison of probabilities made in step **603** indicates that a difference between the probability of one of the at least two alternative paths compared to the probabilities of the other alternative paths is at or above a probability threshold, then the selected path may be selected to be the path with the difference at or above the probability threshold. In other words, the path with the significant highest probability may be selected by the processor device **702.**

When the difference in properties is of the first category, as determined in step **604,** the selected path is selected by the processor device **702** to be the path with a highest probability compared to the other paths.

When the response has been obtained in step **605,** then the selected path is selected to be the path indicated in the obtained response. In other words, the selected path is the one selected by the user. The processor device **702** determines that the selected path is the one selected by the user.

When the response has not been obtained in step **605,** then the selected path is selected by the processor device **702** based on a weighted state associated with each of the at least two alternative paths.

Step **608:** This step corresponds to step **510** in **FIG. 5****.** The processor device **702** may initiate preparation of the vehicle **100** according to the selected path.

The preparation of the vehicle **100** may be associated with one or more of: braking performance, driving performance, vehicle temperature, and/or energy consumption. For example, the fuel cell may be prepared for a specific power usage and adopt the SOE plan of the rechargeable ESS. Another example may be to prepare the rechargeable ESS if the user indicated that the vehicle **100** should stop at a certain external energy transferring station.

When the selected path has not previously been travelled by the vehicle **100,** i.e., this is the first time that the vehicle **100** travels the path, then information about this may be provided e.g., to the user of the vehicle **100.** The path that has not previously been travelled by the vehicle **100** may be referred to as a not validated path selection.

Step **609:** The processor device **702** may determine a vehicle performance associated with the selected path compared to a non-selected path of the alternative paths detected in step **601.** The vehicle performance determines the vehicles capabilities with regards to movement and hence may be needed to determine if the vehicle **100** for example can climb an uphill.

The vehicle performance may be associated with braking performance, driving performance, energy consumption, acceleration and braking performance, vehicle level power abilities, cooling performance etc. The vehicle performance may be associated with energy and power abilities of the vehicle **100,** not only regarding the motion, but also how to optimize energy and power when knowing the motion, for example thermal control. For example, the amount of reduced energy consumption by selecting one path over the non-selected path may be determined, and information about this may be provided for example to the user of the vehicle **100** via a suitable Human Machine Interface (HMI).

The vehicle **100** may comprise the processor device **702,** the control unit **101,** the control system or the computer system configured to perform the method described herein.

A computer program product comprises program code for performing, when executed by the processor device **702,** the control unit **101,** the control system or the computer system, the method described herein.

A control system comprises one or more control units **101** and/or processor devices **702** configured to perform the method described herein.

A non-transitory computer-readable storage medium comprises instructions, which when executed by the processor device **702,** the control unit **101,** the control system or the computer system, cause the processor device **702,** the control unit **101,** the control system or the computer system to perform the method described herein.

A computer system **700** for determining a selected path to be taken by a vehicle 100. The computer system **700** comprises a processor device **702** configured to:
- monitor alternative paths for the vehicle **100;**
- based on the monitoring, determine that the vehicle **100** approaches at least two alternative paths having different properties;
- determine a probability of the vehicle **100** taking each of the at least two alternative paths having different properties;
- compare the probabilities of the at least two alternative paths to each other; and to
- based on a result of the comparison of the probabilities, select a selected path amongst the at least two alternative paths.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processor device **702** (may also be referred to as a control unit), a memory **704,** and a system bus **706.** The computer system **700** may include at least one computing device having the processor device **702.** The system bus **706** provides an interface for system components including, but not limited to, the memory **704** and the processor device **702.** The processor device **702** may include any number of hardware components for conducting data or signal processing or for executing computer code stored in memory **704.** The processor device **702** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processor device **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with a processor device **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program product **720** stored on a transitory or non-transitory computer-usable or computer-readable storage medium (e.g., single medium or multiple media), such as the storage device **714,** which includes complex programming instructions (e.g., complex computer-readable program code) to cause the processor device **702** to carry out the steps described herein. Thus, the computer-readable program code can comprise software instructions for implementing the functionality of the examples described herein when executed by the processor device **702.** The processor device **702** may serve as a controller or control system for the computer system **700** that is to implement the functionality described herein.

The computer system **700** also may include an input device interface **722** (e.g., input device interface and/or output device interface). The input device interface **722** may be configured to receive input and selections to be communicated to the computer system **700** when executing instructions, such as from a keyboard, mouse, touch-sensitive surface, etc. Such input devices may be connected to the processor device **702** through the input device interface **722** coupled to the system bus **706** but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may also include a communications interface **726** suitable for communicating with a network as appropriate or desired.

Summarized, the vehicle **100** does not have a predetermined or pre-planned path and it approaches a predicted path selection for a single intersection, e.g., a part of the path or an external energy transferring station. When the selection of the upcoming path has an impact in terms of preparation and/or range planning the user may either actively and/or passively be queried to acknowledge a predicted path or be queried of a selection of path in e.g., an upcoming intersection.

The vehicle **100** is travelling along a path and has no planned path. The processor device **702** detects that there is a large difference between two upcoming paths. If there is a low confidence of one path being taken over the other path or the selection is of sufficiently large importance, the user is prompted to give an active or passive input, e.g., in a Human Machine Interface (HMI). Once the confirmation has been received the vehicle **100** can prepare for the selected path with a high confidence.

The disclosure decreases the insecurity of which will be the selected path when approaching a path selection where no path has been given in advance from the user and only a prediction of the route can be made. Having user input passive or active confirming the path selection enables improving the vehicle abilities in accordance with the selected path.

When the vehicle **100** travels and does not have a user pre-planned path enhancing the vehicle's knowledge by user input, passive or active confirming the path selection enables improving the vehicle abilities to optimize them in accordance with the selected path.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (700) for determining a selected path to be taken by a vehicle (100), the computer system (700) comprising a processor device (702) configured to:
monitor alternative paths for the vehicle (100);
based on the monitoring, determine that the vehicle (100) approaches at least two alternative paths having different properties;
determine a probability of the vehicle (100) taking each of the at least two alternative paths having different properties;
compare the probabilities of the at least two alternative paths to each other; and to
based on a result of the comparison of the probabilities, select a selected path amongst the at least two alternative paths.

2. A computer-implemented method for determining a selected path to be taken by a vehicle (100), the method comprising:
*monitoring* (500, 600), by a processor device (702) of a computer system (700), alternative paths for the vehicle (100);
based on the monitoring, *determining* (501, 601), by the processor device (702), that the vehicle (100) approaches at least two alternative paths having different properties;
*determining* (502, 602), by the processor device (702), a probability of the vehicle (100) taking each of the at least two alternative paths having different properties;
*comparing* (503, 603), by the processor device (702), the probabilities of the at least two alternative paths to each other; and
based on a result of the comparison of the probabilities, *selecting* (504, 508, 509, 607), by the processor device (702), a selected path amongst the at least two alternative paths.

3. The computer-implemented method according to claim 2, comprising:
*initiating* (510, 608), by the processor device (702), preparation of the vehicle (100) according to the selected path.

4. The computer-implemented method according to any of claims 2-3, wherein the result of the comparison of probabilities indicates that a difference between the probability of one of the at least two alternative paths compared to the probabilities of the other alternative paths is at or above a probability threshold, and
wherein the selected path is selected (504, 607) to be the path with the difference at or above the probability threshold.

5. The computer-implemented method according to any of claims 2-4, wherein the result of the comparison of probabilities indicates that a difference between the probability of each of the at least two alternative paths compared to each other is below a probability threshold; and
when the difference is below the probability threshold, *determining* (505, 604), by the processor device (702), if the difference in properties of the at least two alternative paths are of a first category or second category.

6. The computer-implemented method according to claim 5, wherein the difference in properties is of the first category, and
wherein the selected path is selected (504, 607) to be the path with a highest probability compared to the other paths.

7. The computer-implemented method according to any of claims 5-6, comprising:
when the difference in properties is of a second category, *providing* (506, 605), by the processor device (702), a request for path selection; and
*determining* (507, 606), by the processor device (702), if a response comprising path selection has been obtained;
when the response has been obtained, then the selected path is selected (508, 607) to be the path indicated in the obtained response; and
when the response has not been obtained, then the selected path is selected (509, 607) based on a weighted state associated with each of the at least two alternative paths.

8. The computer-implemented method according to any of claims 2-7, comprising:
*determining* (609), by the processor device (702), a vehicle performance associated with the selected path compared to a non-selected path.

9. The computer-implemented method according to any of claims 3-8, wherein the preparation of the vehicle (100) is associated with one or more of: braking performance, driving performance, vehicle temperature, and/or energy consumption.

10. The computer-implemented method according to any of claims 2-9, wherein the different properties of the at least two alternative paths are associated with at least one of: topography, traffic congestion, not validated path selection, thermal conditions, Point of Interest, POI, possibilities and/or charging possibilities of the at least two alternative paths.

11. A vehicle (100) comprising a processor device (702) configured to perform the method of any of claims 2-10.

12. A computer program product comprising program code for performing, when executed by a processor device (702), the method of any of claims 2-10.

13. A control system comprising one or more control units (101) configured to perform the method of any of claims 2-10.

14. A non-transitory computer-readable storage medium comprising instructions, which when executed by a processor device (702), cause the processor device (702) to perform the method of any of claims 2-10.
